# EUROPÄISCHE PATENTSCHRIFT

(11) **EP 2 652 472 B1**
(45) Veröffentlichungstag und Bekanntmachung des Hinweises auf die Patenterteilung: **20.03.2019**
(21) Anmeldenummer: 11785454.7
(22) Anmeldetag: 23.11.2011
(51) Int. Cl.: B23K 31/02, G01L 9/00

(54) **DRUCKSENSOR UND VERFAHREN ZU DESSEN HERSTELLUNG**
PRESSURE SENSOR AND METHOD FOR PRODUCING SAID SENSOR
CAPTEUR DE PRESSION ET SON PROCÉDÉ DE FABRICATION

(30) Priorität: 14.12.2010 DE 102010063065
(43) Veröffentlichungstag der Anmeldung: 23.10.2013
(73) Patentinhaber: Endress+Hauser SE+Co. KG, 79689 Maulburg (DE)
(72) Erfinder: SELDERS, Peter, 79689 Maulburg (DE); ROßBERG, Andreas, 79713 Bad Säckingen (DE); SCHMIDT, Elke, 79713 Bad Säckingen (DE); BERLINGER, Andrea, 76532 Baden-Baden (DE)
(74) Vertreter: Andres, Angelika Maria
(86) Internationale Anmeldenummer: PCT/EP2011/070824
(87) Internationale Veröffentlichungsnummer: WO 2012/079939

(56) Entgegenhaltungen:
- EP-A1- 1 061 351
- WO-A1-2009/019004
- DE-A1-102006 056 172

## Beschreibung

Die vorliegende Erfindung betrifft einen keramischen Drucksensor und ein Verfahren zu dessen Herstellung. Keramische Drucksensoren umfassen einen Grundkörper und eine Messmembran, wobei die Messmembran mittels eines Aktivhartlots mit dem Grundkörper gefügt ist. Ein geeignetes Aktivhartlot zum Fügen von Keramikteilen aus Korund ist beispielsweise eine Zr-Ni-Ti-Legierung, da diese von ihrem Wärmeausdehnungskoeffizienten mit Korund kompatibel ist.

Im Europäischen Patent EP 0 490 807 B1 ist ein solches Aktivhartlot offenbart. Die Patentschrift EP 0 558 874 B1 offenbart ein Verfahren zum Herstellen von Ringen aus einem solchen Aktivhartlot, Ringe aus Aktivhartlot werden zum Verbinden von Messmembran und den Grundkörper als Abstandhalter zwischen die beiden Teile gelegt, und in einem Hochvakuumlötprozess aufgeschmolzen, wodurch eine druckdichte und hochfeste ringförmige Verbindung zwischen den beiden Keramikteilen entsteht. Eine Alternative zum Aufbringen des Lots in Form von vorgefertigten Ringen besteht darin, das Aktivhartlot in einem Siebdruckverfahren bereitzustellen. Eine siebdruckfähige Paste des Aktivhartlots und ein Verfahren zu deren Herstellung ist in der Offenlegungsschrift EP 0 988 919 A1 offenbart.

Die Veröffentlichungen EP 1 061 351 A1 und DE 10 2006 056 172 A1 offenbaren einen kapazitiven keramischen Drucksensor mit einer Membran und einem Grundkörper, wobei der Grundkörper und die Membran am Rand mittels eines Abstandhalters unter Bildung einer Kammer miteinander verlötet oder hartverlötet sind.

Die Veröffentlichung WO 2009 019 004 A1 offenbart einen kapazitiven Sensor, mit zwei plattenförmigen Gebilden, die mit einem zwischenliegenden Abstandhalter verlötet oder verklebt sind.

Aus dem Wunsch zur Miniaturisierung von Drucksensoren folgt indirekt der Bedarf nach einer dünneren Fügestelle, da - beispielsweise bei einem keramischen Drucksensor mit einem kapazitiven Wandler - die Miniaturisierung zu einer Verkleinerung der Elektrodenflächen des kapazitiven Wandlers führt, die dann durch eine Verringerung des Abstands zu kompensieren ist, wenn die Kapazität unverändert bleiben soll.

Die Ringe lassen sich jedoch nur in einer Mindeststärke von etwa 30 µm in reproduzierbarer Stärke herstellen, so dass dünnere Fügestellen, mit derartigen Aktivlotringen nicht mit hinreichend geringer Streuung herzustellen sind.

Gleichermaßen führt der Einsatz einer siebdruckfähigen Paste aufgrund der Körnung des Lots zu Mindeststärken der Fügestelle von 30 µm, wenn eine hinreichende Homogenität der Fügestelle und eine geringe Streuung des Abstands zwischen den Keramikteilen erzielt werden soll.

Die noch unveröffentlichte Anmeldung DE 10 2010 043119 offenbart ein Verfahren zur Herstellung eines Drucksensors, in dem das ganze Material der Fügestelle mittels Gasphasenabscheidung präpariert wird. Wenngleich sich damit beliebig dünne Fügestellen präparieren lassen, ist es doch ein vergleichsweise teures Verfahren, da bei der Gasphasenabscheidung naturgemäß nur ein Bruchteil des verdampften Materials zum Substrat gelangt.

Es ist daher die Aufgabe der vorliegenden Erfindung, ein Verfahren und ein danach hergestelltes keramisches Produkt bereitzustellen, welche die Nachteile des Stands der Technik überwinden.

Die Aufgabe wird erfindungsgemäß gelöst durch das Verfahren gemäß dem Patentanspruch 1 und den Drucksensor gemäß Patentanspruch 13.

Das erfindungsgemäße Verfahren zum Herstellen eines keramischen Drucksensors umfasst:
Bereitstellen eines keramischen Grundkörpers, einer keramischen Messmembran, und eines Zwischenrings;
Bereitstellen eines Aktivhartlotmaterials mittels Gasphasenabscheidung zumindest auf einem ersten Oberflächenabschnitt einer ersten Oberfläche und auf einem zweiten Oberflächenabschnitt einer zweiten Oberfläche,
wobei die erste Oberfläche eine Oberfläche des Grundkörpers ist, die mit dem Zwischenring mittels des Aktivhartlots zu verbinden ist, oder eine Oberfläche des Zwischenrings, die mittels des Aktivhartlots mit dem Grundkörper zu verbinden ist;
wobei die zweite Oberfläche eine Oberfläche der Messmembran ist, die mit dem Zwischenring mittels des Aktivhartlots zu verbinden ist, oder eine Oberfläche des Zwischenrings, die mittels des Aktivhartlots mit der Messmembran zu verbinden ist;
Positionieren des Zwischenrings zwischen der Messmembran und dem Grundkörper; und
Erhitzen des Aktivhartlots in einem Lötprozess, wobei erfindungsgemäß der Zwischenring während des Lötprozesses ein Festkörper bleibt.

Der Lötprozess kann gemäß einer Weiterbildung der Erfindung insbesondere ein Vakuumlötprozess oder ein Lötprozess unter Schutzgas sein.

In einer Weiterbildung der Erfindung umfasst der Zwischenring einen metallischen Werkstoff welcher insbesondere W, MoTiZr, MoCu aufweist, oder einen keramischen Werkstoff, insbesondere Korund In einer Weiterbildung der Erfindung weist der Zwischenring eine Stärke von nicht weniger als 10 µm auf.

In einer Weiterbildung der Erfindung weist der Zwischenring eine Stärke von nicht mehr als 60 µm, insbesondere nicht mehr als 45 µm, bevorzugt nicht mehr als 30 und besonders bevorzugt nicht mehr als 25 µm auf.

In einer Weiterbildung der Erfindung beträgt die Stärke des mittels Gasphasenabscheidung auf einem Oberflächenabschnitt bereitgestellten Aktivhartlotmaterials nicht weniger als 0,05 µm, vorzugsweise nicht weniger als 0,1 µm.

Gemäß einer Weiterbildung der Erfindung erfolgt das Bereitstellen des Aktivhartlotmaterials mittels Gasphasenabscheidung in der Weise, dass jeweils auf beiden mit dem Zwischenring zu fügenden Oberflächenabschnitten des Grundkörpers bzw. der Messmembran und auf mindestens einer zu fügenden Oberfläche des Zwischenrings, vorzugsweise auf beiden zu fügenden Oberflächen des Zwischenrings das Aktivhartlotmaterial mittels Gasphasenabscheidung bereitgestellt wird.

Gemäß einer anderen Weiterbildung der Erfindung erfolgt das Bereitstellen des Aktivhartlotmaterials mittels Gasphasenabscheidung in der Weise, dass auf beiden zu fügenden Oberflächen des Zwischenrings und auf mindestens einem der mit dem Zwischenring zu fügenden Oberflächenabschnitte des Grundkörpers bzw. der Messmembran, vorzugsweise auf beiden zu fügenden Oberflächenabschnitte des Grundkörpers und der Messmembran das Aktivhartlotmaterial mittels Gasphasenabscheidung bereitgestellt wird.

Gemäß einer anderen Weiterbildung der Erfindung kann das Bereitstellen des Aktivhartlots mittels Gasphasenabscheidung in der Weise erfolgen, dass mindestens eine keramische Oberfläche bzw. ein keramischer Oberflächenabschnitt zumindest mit einer aktiven Komponente des Aktivhartlots beschichtet wird. Anschließend kann auf die Schicht der aktiven Komponente das Aktivlot eine Mischung aller Komponenten des Aktivlots abgeschieden werden um ein lotfähiges Aktivhartlot bereitzustellen, und/oder eine Mischung der Komponenten des Aktivhartlots kann auf einer Oberfläche bzw. einem Oberflächenabschnitt bereitgestellt werden, welcher mit der keramischen Oberfläche bzw. mit dem keramischen Oberflächenabschnitt zu fügen ist, die bzw. der mit der aktiven Komponente beschichtet ist.

In einer Weiterbildung der Erfindung weist die Beschichtung mit der mindestens einen aktiven Komponente eine Stärke von nicht weniger als 20 nm, insbesondere nicht weniger als 40 nm auf.

In einer Weiterbildung der Erfindung weist die Beschichtung mit der mindestens einen aktiven Komponente eine Stärke von nicht mehr als 200 nm, insbesondere nicht mehr als 100 nm auf.

Das Bereitstellen des Aktivhartlots mittels Gasphasenabscheidung kann beispielsweise durch Sputtern bzw. Kathodenzerstäubung, insbesondere in einer Anlage mit einem Hochleistungsmagnetron oder durch thermisches Verdampfen des Aktivhartlotmaterials erfolgen. Beim Sputtern kann ein Target bzw. eine Kathode eingesetzt werden, welche das Aktivhartlot in der gewünschten Zusammensetzung der Komponenten des bereitzustellenden Aktivhartlots enthält. Beim thermischen Verdampfen des Aktivhartlotmaterials aus einer Schmelze der Legierung besteht das Risiko der Segregation der einzelnen Komponente in der Schmelze, was zu einer Anreicherung einer Komponente an der Oberfläche der Schmelze führen könnte, wodurch die Zusammensetzung des verdampften Materials nicht mehr der ursprünglichen Zusammensetzung des Aktivhartlots entsprechen würde. Daher ist es für das thermische Verdampfen vorzuziehen, separate Quellen für die einzelnen Komponenten des Aktivhartlots bereitzustellen und die resultierende Zusammensetzung des abgeschiedenen Aktivhartlots über die jeweiligen Verdampfungsraten der Komponenten zu steuern.

Die mindestens eine aktive Komponente umfasst insbesondere Titan oder Zirkonium, wobei die Fügestelle eine Zr-Ni-Ti-Legierung aufweist. In einer Weiterbildung der Erfindung enthält die mindestens eine Beschichtung Zr und Ti.

Zumindest die Messmembran weist gemäß einer Weiterbildung der Erfindung Korund auf, wobei es derzeit bevorzugt ist, dass auch der Grundkörper Korund aufweist.

Soweit der Zwischenring ein metallischer Zwischenring ist, kann gemäß einer Weiterbildung der Erfindung auf dem Zwischenring ein Haftvermittler, insbesondere Titan abgeschieden werden, um die Haftung des Aktivhartlots am Zwischenring zu erleichtern bzw. zu verbessern.

Der erfindungsgemäße Drucksensor umfasst einen keramischen Grundkörper, eine keramische Messmembran, und einen Zwischenring, der zwischen dem Grundkörper und der Messmembran angeordnet ist, wobei der Grundkörper mit dem Zwischenring mittels einer ersten Fügestelle und der Zwischenring mit der Messmembran mittels einer zweiten Fügestelle verbunden sind, wobei die erste und die zweite Fügestellen jeweils ein Aktivhartlot aufweisen, wobei der Zwischenring einen metallischen Werkstoff aufweist, nämlich W, MoTiZr, MoCu aufweist, oder einen keramischen Werkstoff, nämlich Korund. Das Aktivhartlot umfasst gemäß einer Weiterbildung der Erfindung eine Zr-Ni-Ti-Legierung.

In einer Weiterbildung der Erfindung weist der Zwischenring eine Stärke von nicht weniger als 10 µm auf.

In einer Weiterbildung der Erfindung weist der Zwischenring eine Stärke von nicht mehr als 60 µm, insbesondere nicht mehr als 45 µm, bevorzugt nicht mehr als 30 und besonders bevorzugt nicht mehr als 25 µm auf.

Der erfindungsgemäße Drucksensor umfasst weiterhin einen hier nicht näher dargestellten Wandler zum Wandeln einer druckabhängigen Verformung der Messmembran in ein elektrisches oder optisches Signal. Der Wandler kann insbesondere ein kapazitiver, ein resistiver oder ein interferometrischer Wandler sein.

Der Drucksensor kann insbesondere einen Absolutdrucksensor, einen Relativdrucksensor oder einen Differenzdrucksensor umfassen. Bei einem Differenzdrucksensor, kann eine Messmembran beispielsweise zwischen zwei Grundkörpern angeordnet sein, oder ein Grundkörper trägt zwei Messmembranen, die über eine Übertragungsflüssigkeit im Grundkörper hydraulisch miteinander gekoppelt sind. Zumindest eine der Verbindungen zwischen der einen Messmembran und den beiden Grundkörpern bzw. zwischen den beiden Messmembranen und dem einen Grundkörper umfasst erfindungsgemäß einen Zwischenring, der mittels einer ersten Fügestelle mit dem Grundkörper und mittels einer zweiten Fügestelle mit der Messmembran verbunden ist, wobei bevorzugt jeweils beide Verbindungen einen solchermaßen verbunden Zwischenring aufweisen.

Die Erfindung wird nun anhand der in den Zeichnungen dargestellten Ausführungsbeispiele erläutert.

Es zeigt:
- Fig. 1:: einen Längsschnitt durch die Komponenten eines ersten Ausführungsbeispiels eines erfindungsgemäßen Drucksensors;
- Fig. 2:: einen Längsschnitt durch die Komponenten eines zweiten Ausführungsbeispiels eines erfindungsgemäßen Drucksensors;
- Fig. 3:: einen Längsschnitt durch die Komponenten eines dritten Ausführungsbeispiels eines erfindungsgemäßen Drucksensors und
- Fig. 4:: einen Längsschnitt durch die Komponenten eines vierten Ausführungsbeispiels eines erfindungsgemäßen Drucksensors.

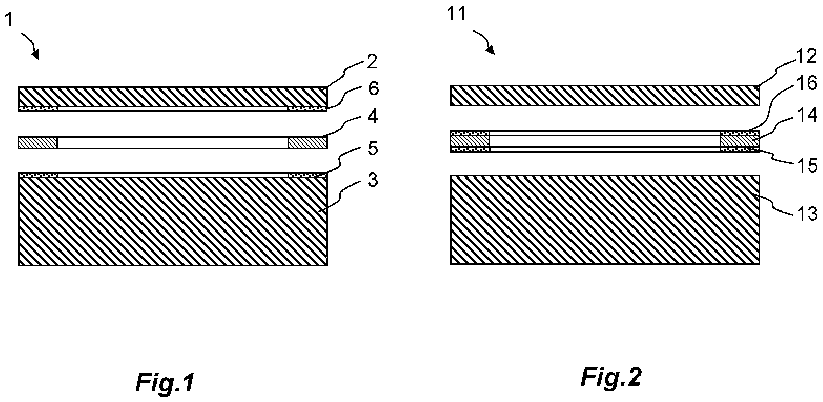

Die in Fig. 1 dargestellten Komponenten eines Drucksensors 1 umfassen eine kreisscheibenförmige Messmembran 2 und einen kreisscheibenförmigen Grundkörper 3, wobei sowohl die Messmembran als auch der Grundkörper Korund aufweisen. Die Messmembran und der Grundkörper weisen beispielsweise einen Durchmesser von nicht weniger als 1 cm und nicht mehr als 7 cm auf. Die Messmembran weist beispielsweise eine Stärke von nicht weniger als 50 µm und nicht mehr als 3 mm auf. Die tatsächlich gewählte Stärke der Messmembran ist - bei gegebener Festigkeit des Membranmaterials - insbesondere eine Funktion des Druckmessbereichs, der zu erwartenden Überlasten und des Durchmessers der Messmembran. Der Grundkörper weist eine Stärke von einigen mm auf, um bezüglich der auf ihn wirkenden Kräfte möglichst steif zu sein. Zwischen der Messmembran 2 und dem Rundkörper 3 ist ein Zwischenring 4 angeordnet, welcher beispielsweise eine Materialstärke von etwa 25 µm aufweist und beispielsweise aus einer Molybdän-KupferLegierung gebildet ist.

Der Außendurchmesser des Zwischenrings ist im wesentlichen gleich dem Außendurchmesser des Grundkörpers und der Messmembran, wobei der Innendurchmesser beispielsweise 2 bis 8 mm weniger beträgt, um eine hineichend große Auflagefläche für einen Randbereich der Messmembran bereitzustellen, wobei im Messbetrieb auf dem Randbereich der Messmembran gewöhnlich ein Dichtring aufliegt, der zwischen dem Drucksensor und einer Dichtfläche um eine Gehäuseöffnung eingespannt ist.

Zum Verbinden der Messmembran mit dem Zwischenring und des Grundkörpers mit dem Zwischenring sind auf der Messmembran 2 und dem Grundkörper 3 jeweils fluchtend mit dem Zwischenring Schichten eines Aktivhartlots 5, 6 mittels Gasphasenabscheidung präpariert, wobei die Schichten beispielsweise eine Stärke von etwa 5 µm aufweisen. Das Aktivhartlot kann insbesondere ein Zr-Ni-Ti-Aktivhartlot sein.

Beim Abscheiden des Aktivhartlots auf den Oberflächen der Messmembran 2 und des Grundkörpers 3 sind die nicht zu beschichtenden Oberflächenabschnitte mit Masken abzudecken.

Die beschriebenen Komponenten werden in der dargestellten Anordnung aufeinander gelegt und anschließend in einem Hochvakuumlötprozess miteinander gefügt, wodurch zwischen Messmembran und Grundkörper eine Referenzdruckkammer gebildet wird, deren Höhe durch die Stärke des Zwischenrings und die jeweiligen Stärken der Aktivhartlotschichten definiert ist.

Das in Fig. 2 dargestellte zweite Ausführungsbeispiel eines erfindungsgemäßen Drucksensors 11 umfasst eine Messmembran 12, einen Grundkörper 13, wobei für die Materialien und Abmessungen der Messmembran, des Grundkörpers und des Zwischenrings die Ausführung zum ersten Ausführungsbeispiel entsprechend gelten. Im hier betrachteten Ausführungsbeispiel ist jedoch der Zwischenring 14 mit einer ersten Schicht des Aktivhartlots 15 und mit einer zweiten Schicht des Aktivhartlots 16 beschichtet, so dass ein Abscheiden des Aktivhartlots auf der Messmembran bzw. dem Grundkörper entfallen kann. Zum Verbinden der genannten Komponenten werden selbige in der dargestellten Reihenfolge aufeinander gelegt und in einem Hochvakuumlötprozess miteinander gefügt. Ein Vorteil des hier gezeigten Ausführungsbeispiels besteht darin, dass die Maskierung der Messmembran und des Grundkörpers für das Abscheiden des Aktivhartlots entfallen kann, und für den Zwischenring 14 ist eine Maskierung nicht erforderlich.

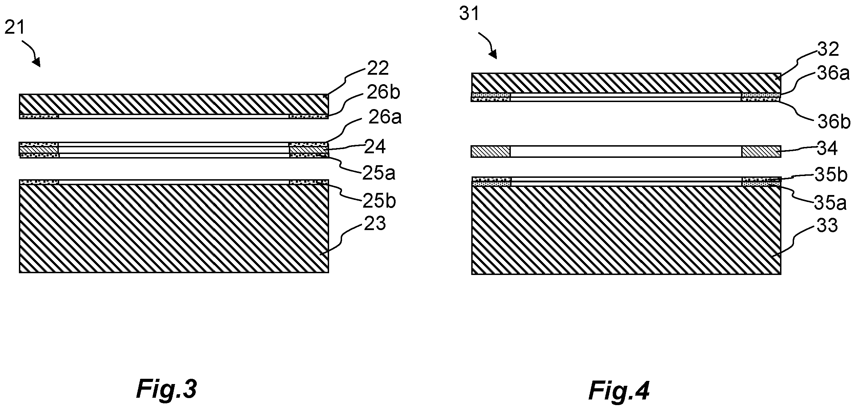

Das in Fig. 3 dargestellte dritte Ausführungsbeispiel eines erfindungsgemäßen Drucksensors 21 umfasst wiederum eine Messmembran 22 und einen Grundkörper 23 sowie einen Zwischenring 24, wobei hier sämtliche zu fügende Oberflächenabschnitte mittels Gasphasenabscheidung mit einem Aktivhartlot beschichtet sind. So ist für die Verbindung zwischen dem Grundkörper 23 und dem Zwischenring 24 auf einer dem Grundkörper zugewandten ersten Oberfläche des Zwischenrings eine Schicht des Aktivhartlot 25a und auf dem Grundkörper eine ringförmige Schicht des Aktivhartlots 25b abgeschieden. Entsprechend ist auf einer der Messmembran zugewandten zweiten Oberfläche des Zwischenrings 24 eine Schicht des Aktivhartlots 26a und auf der Messmembran eine ringförmige Schicht des Aktivhartlots 26b abgeschieden. Die hier beschriebene Vorgehensweise kann beispielsweise vorteilhaft sein, um eine gleichmäßige Benetzung der Oberflächen mit dem Aktivhartlot zu gewährleisten. Dies ist insbesondere dann vorteilhaft, wenn auch der Zwischenring 24 wie die Messmembran 22 und der Grundkörper 23 einen keramischen Werkstoff, insbesondere Korund aufweist.

Das in Fig. 4 dargestellte vierte Ausführungsbeispiel eines erfindungsgemäßen Drucksensors 31 entspricht weitgehend dem ersten Ausführungsbeispiel, wobei nun die Messmembran 32 und der Grundkörper 33 in der Weise mit dem Aktivhartlot beschichtet sind, dass zunächst auf der Stirnfläche des Grundkörpers und auf der dem Grundkörper bzw. dem Zwischenring zugewandten Oberfläche der Messmembran ein ringförmiger Bereich mit einer aktiven Komponente 35a, 36a des Aktivhartlots beschichtet werden, bevor zur Vervollständigung des Aktivhartlots alle Komponenten des Aktivhartlots in einer zweiten Schicht 35b, 36b auf der aktiven Komponente abgeschieden werden. Die Stärke der Schicht der aktiven Komponente 35a, 35b kann beispielsweise jeweils etwa 100 nm betragen, während die zweite Schicht des Aktivhartlots 35b, 36b jeweils etwa 1 µm beträgt.

Sämtliche Ausführungsbeispiele des erfindungsgemäßen Drucksensors umfassen weiterhin einen Wandler, zum Wandeln einer druckabhängigen Verformung der Messmembran, wobei der Wandler ein kapazitiver, ein (piezo-) resistiver oder ein optischer Wandler sein kann. Einzelheiten hierzu sind dem Fachmann geläufig und bedürfen nicht der näheren Darstellung.

Gleichermaßen kann der Drucksensor ein Absolutdrucksensor oder ein Relativsensor sein, wobei bei einem Absolutdrucksensor die zwischen der Messmembran und dem Grundkörper gebildete Referenzdruckkammer evakuiert ist, während sie bei einem Relativdrucksensor über einen Kanal durch den Grundkörper mit dem Umgebungsdruck beaufschlagbar ist. Weiterhin kann der erfindungsgemäße Drucksensor ein Differenzdrucksensor sein, wozu beispielsweise ein Grundkörper zwischen zwei Messmembranen jeweils mit einem Zwischenring zu fügen ist, oder wozu eine Messmembran jeweils mit einem Zwischenring zwischen zwei Grundkörpern anzuordnen ist. Der grundsätzliche Aufbau der geschilderten Arten von Differenzdrucksensoren mit einem Grundkörper zwischen zwei Messmembranen oder einer Messmembran zwischen zwei Grundkörpern sind dem Fachmann geläufig und brauchen hier nicht näher erläutert zu werden.

## Patentansprüche

1. Verfahren zum Herstellen eines Drucksensors, umfassend:
Bereitstellen eines keramischen Grundkörpers, einer keramischen Messmembran, und eines Zwischenrings;
Bereitstellen eines Aktivhartlotmaterials
**dadurch gekennzeichnet, dass**
das Bereitstellen des Aktivhartlotmaterials mittels Gasphasenabscheidung zumindest auf einem ersten Oberflächenabschnitt einer ersten Oberfläche und auf einem zweiten Oberflächenabschnitt einer zweiten Oberfläche erfolgt,
wobei die erste Oberfläche eine Oberfläche des Grundkörpers ist, die mit dem Zwischenring mittels des Aktivhartlots zu verbinden ist, oder eine Oberfläche des Zwischenrings, die mittels des Aktivhartlots mit dem Grundkörper zu verbinden ist;
wobei die zweite Oberfläche eine Oberfläche der Messmembran ist, die mit dem Zwischenring mittels des Aktivhartlots zu verbinden ist, oder eine Oberfläche des Zwischenrings, die mittels des Aktivhartlots mit der Messmembran zu verbinden ist;
Positionieren des Zwischenrings zwischen der Messmembran und dem Grundkörper; und
Erhitzen des Aktivhartlots in einem Lötprozess, wobei der Zwischenring während des Lötprozesses ein Festkörper bleibt.

2. Verfahren nach Anspruch 1, wobei der Lötprozess ein Vakuumlötprozess oder ein Lötprozess unter Schutzgas ist.

3. Verfahren nach Anspruch 1 oder 2, wobei der Zwischenring einen metallischen Werkstoff aufweist, insbesondere W, MoTiZr oder MoCu.

4. Verfahren nach Anspruch 1 oder 2, wobei der Zwischenring einen keramischen Werkstoff aufweist, insbesondere Korund.

5. Verfahren nach einem der vorhergehenden Ansprüche, wobei der Zwischenring eine Stärke von nicht weniger als 10 µm aufweist.

6. Verfahren nach einem der vorhergehenden Ansprüche, wobei der Zwischenring eine Stärke von nicht mehr als 60 µm, insbesondere nicht mehr als 45 µm, bevorzugt nicht mehr als 30 und besonders bevorzugt nicht mehr als 25 µm aufweist.

7. Verfahren nach einem der vorhergehenden Ansprüche, wobei die Stärke des mittels Gasphasenabscheidung auf einem Oberflächenabschnitt bereitgestellten Aktivhartlotmaterials nicht weniger als 0,05 µm, vorzugsweise nicht weniger als 0,1 µm beträgt.

8. Verfahren nach einem der vorhergehenden Ansprüche, wobei das Bereitstellen des Aktivhartlotmaterials mittels Gasphasenabscheidung in der Weise erfolgt, dass jeweils auf beiden mit dem Zwischenring zu fügenden Oberflächenabschnitten des Grundkörpers bzw. der Messmembran und auf mindestens einer zu fügenden Oberfläche des Zwischenrings, vorzugsweise auf beiden zu fügenden Oberflächen des Zwischenrings das Aktivhartlotmaterial mittels Gasphasenabscheidung bereitgestellt wird.

9. Verfahren nach einem der Ansprüche 1 bis 7, wobei das Bereitstellen des Aktivhartlotmaterials mittels Gasphasenabscheidung in der Weise erfolgt, dass auf beiden zu fügenden Oberflächen des Zwischenrings und auf mindestens einem der mit dem Zwischenring zu fügenden Oberflächenabschnitte des Grundkörpers bzw. der Messmembran, vorzugsweise auf beiden zu fügenden Oberflächenabschnitte des Grundkörpers und der Messmembran das Aktivhartlotmaterial mittels Gasphasenabscheidung bereitgestellt wird.

10. Verfahren nach einem der vorhergehenden Ansprüche, wobei das Bereitstellen des Aktivhartlotmaterials mittels Gasphasenabscheidung in der Weise erfolgt, dass mindestens eine keramische Oberfläche bzw. ein keramischer Oberflächenabschnitt zumindest mit einer aktiven Komponente des Aktivhartlots beschichtet wird.

11. Verfahren nach Anspruch 10, wobei anschließend auf die Schicht der aktiven Komponente eine Mischung aller Komponenten des Aktivlots abgeschieden wird, um ein lotfähiges Aktivhartlot bereitzustellen, und/oder
wobei eine Mischung aller Komponenten des Aktivhartlots auf einer Oberfläche bzw. einem Oberflächenabschnitt bereitgestellt wird, welcher mit der keramischen Oberfläche bzw. mit dem keramischen Oberflächenabschnitt zu fügen ist, auf der bzw. dem die aktive Komponente abgeschieden ist.

12. Verfahren nach einem der vorhergehenden Ansprühe, wobei der Zwischenring ein metallischer Zwischenring ist, wobei auf dem Zwischenring ein Haftvermittler, insbesondere Ti abgeschieden wird.

13. Drucksensor, umfassend einen keramischen Grundkörper, eine keramische Messmembran, und einen Zwischenring, der zwischen dem Grundkörper und der Messmembran angeordnet ist, wobei der Grundkörper mit dem Zwischenring mittels einer ersten Fügestelle und der Zwischenring mit der Messmembran mittels einer zweiten Fügestelle verbunden sind, wobei die erste und die zweite Fügestellen jeweils ein Aktivhartlot aufweisen,
**dadurch gekennzeichnet, dass**
der Zwischenring einen metallischen Werkstoff aufweist, nämlich W, MoTiZr, oder MoCu aufweist, oder einen keramischen Werkstoff, nämlich Korund.

14. Drucksensor nach Anspruch 13, wobei die Messmembran und/oder der Grundkörper Korund aufweisen, und wobei das Aktivhartlot eine Zr-Ni-Ti-Legierung aufweist.

15. Drucksensor nach einem der Ansprüche 13 bis 14, wobei der Zwischenring eine Stärke von nicht mehr als 60 µm, insbesondere nicht mehr als 45 µm, bevorzugt nicht mehr als 30 und besonders bevorzugt nicht mehr als 20 µm aufweist.

## Claims

1. Procedure designed for the fabrication of a pressure sensor, comprising the following steps:
The provision of a ceramic meter body, a ceramic measuring diaphragm and an intermediate ring;
The provision of an active hard solder material
**characterized in that**
the provision of the active hard solder material is achieved by means of vapor deposition at least on a first surface section of a first surface and on a second surface section of a second surface,
wherein the first surface is a surface of the meter body, which is to be connected to the intermediate ring by means of the active hard solder, or a surface of the intermediate ring, which is to be connected to the meter body by means of the active hard solder;
wherein the second surface is a surface of the measuring diaphragm, which is to be connected to the intermediate ring by means of the active hard solder, or a surface of the intermediate ring, which is to be connected to the measuring diaphragm by means of the active hard solder;
Placement of the intermediate ring between the measuring diaphragm and the meter body; and
Heating of the active hard solder in a soldering process, wherein the intermediate ring remains a solid body during the soldering process.

2. Procedure as claimed in Claim 1, wherein the soldering process is a vacuum soldering process or a soldering process under shield gas.

3. Procedure as claimed in Claim 1 or 2, wherein the intermediate ring features a metallic material, particularly W, Mo6iZr or MoCu.

4. Procedure as claimed in Claim 1 or 2, wherein the intermediate ring features a ceramic material, particularly corundum.

5. Procedure as claimed in one of the previous claims, wherein the intermediate ring has a thickness of not less than 10 µm.

6. Procedure as claimed in one of the previous claims, wherein the intermediate ring has a thickness of not more than 60 µm, particularly not more than 45 µm, preferably not more than 30 µm and particularly preferably not more than 25 µm.

7. Procedure as claimed in one of the previous claims, wherein the thickness of the active hard solder material provided on a surface section by means of vapor deposition is not less than 0.05 µm, preferably not less than 0.1 µm.

8. Procedure as claimed in one of the previous claims, wherein the active hard solder material is provided by means of vapor deposition in such a way that the active hard solder material is provided on both surface sections of the meter body or measuring diaphragm which are to be joined to the intermediate ring, and on at least one surface of the intermediate ring to be joined, preferably on both surfaces of the intermediate ring to be joined.

9. Procedure as claimed in one of the Claims 1 to 7, wherein the active hard solder material is provided by means of vapor deposition in such a way that the active hard solder material is provided by means of vapor deposition on both surfaces of the intermediate ring that are to be joined and on at least one of the surface sections of the meter body or measuring diaphragm which are to be joined to the intermediate ring, preferably on both surface sections of the meter body and measuring membrane that are to be joined.

10. Procedure as claimed in one of the previous claims, wherein the active hard solder is provided by means of vapor deposition in such a way that at least one ceramic surface or a ceramic surface section is coated at least with an active component of the active hard solder.

11. Procedure as claimed in Claim 10, wherein, following the layer of the active component, a mixture of all the components of the active solder is deposited in order to provide a solderable active hard solder
and/or
wherein a mixture of all the components of the active hard solder is provided on a surface or a surface section which is to be joined to the ceramic surface or the ceramic surface section on which the active component is deposited.

12. Procedure as claimed in one of the previous claims, wherein the intermediate ring is a metal intermediate ring wherein a bonding agent, particularly Ti, is deposited on the intermediate ring.

13. Pressure sensor, comprising a ceramic meter body, a ceramic measuring diaphragm and an intermediate ring, which is arranged between the meter body and the measuring diaphragm, wherein the meter body is connected to the intermediate ring by means of a first joint and the intermediate ring is connected to the measuring diaphragm by means of a second joint, wherein the first and second joints each feature an active hard solder,
**characterized in that**
the intermediate ring features a metal material, namely W, MoTiZr or MoCu, or a ceramic material, namely corundum.

14. Pressure sensor as claimed in Claim 13, wherein the measuring diaphragm and/or the meter body feature corundum and wherein the active hard solder features a Zr-Ni-Ti alloy.

15. Pressure sensor as claimed in one of the Claims 13 to 14, wherein the intermediate ring has a thickness of not more than 60 µm, particularly not more than 45 µm, preferably not more than 30 µm and particularly preferably not more than 20 µm.

## Revendications

1. Procédé destiné à la fabrication d'un capteur de pression, comprenant les étapes suivantes :
Mise à disposition d'un corps de base en céramique, d'une membrane de mesure en céramique et d'une bague intermédiaire ;
Mise à disposition d'un matériau de brasage
**caractérisé**
**en ce que** la mise à disposition du matériau de brasage actif au moyen d'un dépôt en phase gazeuse est réalisée au moins sur une première partie de surface d'une première surface et sur une deuxième partie de surface d'une deuxième surface, la première surface étant une surface du corps de base, qui doit être reliée avec la bague intermédiaire au moyen de la brasure active, ou une surface de la bague intermédiaire, qui doit être reliée avec le corps de base au moyen de la brasure active ;
la deuxième surface étant une surface de la membrane de mesure, qui doit être reliée avec la bague intermédiaire au moyen de la brasure active, ou une surface de la bague intermédiaire, qui doit être reliée avec la membrane de mesure au moyen de la brasure active ;
Positionnement de la bague intermédiaire entre la membrane de mesure et le corps de base ; et
Échauffement de la brasure active dans un processus de brasage, la bague intermédiaire restant un corps solide pendant le processus de brasage.

2. Procédé selon la revendication 1, pour lequel le processus de brasage est un processus de brasage sous vide ou un processus de brasage sous gaz protecteur.

3. Procédé selon la revendication 1 ou 2, pour lequel la bague intermédiaire comporte un matériau métallique, notamment W, Mo6iZr ou MoCu.

4. Procédé selon la revendication 1 ou 2, pour lequel la bague intermédiaire comporte un matériau céramique, notamment du corindon.

5. Procédé selon l'une des revendications précédentes, pour lequel la bague intermédiaire présente une épaisseur d'au moins 10 µm.

6. Procédé selon l'une des revendications précédentes, pour lequel la bague intermédiaire présente une épaisseur ne dépassant pas 60 µm, notamment ne dépassant pas 45 µm, de préférence ne dépassant pas 30 µm et particulièrement de préférence ne dépassant pas 25 µm.

7. Procédé selon l'une des revendications précédentes, pour lequel l'épaisseur du matériau de brasage actif mis à disposition au moyen d'un dépôt en phase gazeuse sur une partie de surface est d'au moins 0,05 µm, de préférence d'au moins 0,1 µm.

8. Procédé selon l'une des revendications précédentes, pour lequel la mise à disposition du matériau de brasage actif est réalisée au moyen d'un dépôt en phase gazeuse de telle sorte que le matériau de brasage actif est mis à disposition au moyen d'un dépôt en phase gazeuse sur les deux parties de surface du corps de base ou de la membrane de mesure devant être assemblées avec la bague intermédiaire, et sur au moins l'une des surfaces à assembler de la bague intermédiaire, de préférence sur les deux parties de surface à assembler de la bague intermédiaire.

9. Procédé selon l'une des revendications 1 à 7, pour lequel la mise à disposition du matériau de brasage actif est réalisée au moyen d'un dépôt en phase gazeuse de telle sorte que le matériau de brasage actif est mis à disposition au moyen d'un dépôt en phase gazeuse sur les deux surfaces à assembler de la bague intermédiaire et sur au moins l'une des parties de surface à assembler de la bague intermédiaire du corps de base ou de la membrane de mesure, de préférence sur les deux parties de surface à assembler du corps de base et de la membrane de mesure.

10. Procédé selon l'une des revendications précédentes, pour lequel la mise à disposition du matériau de brasage actif est réalisée au moyen d'un dépôt en phase gazeuse de telle sorte qu'au moins une surface en céramique ou une partie de surface en céramique est revêtue au moins avec un composant actif de la brasure active.

11. Procédé selon la revendication 10, pour lequel est déposé ensuite, sur la couche du composant actif, un mélange de tous les composants de la brasure active afin de mettre à disposition une brasure active brasable
et/ou
pour lequel un mélange de tous les composants de la brasure active est mis à disposition sur une surface ou sur une partie de surface, laquelle doit être assemblée avec la surface en céramique ou avec la partie de surface en céramique, sur laquelle est déposé le composant actif.

12. Procédé selon l'une des revendications précédentes, pour lequel la bague intermédiaire est une bague intermédiaire métallique, un agent adhésif, notamment à base de Ti, étant déposé sur la bague intermédiaire.

13. Capteur de pression, comprenant un corps de base en céramique, une membrane de mesure en céramique et une bague intermédiaire, qui est disposée entre le corps de base et la membrane de mesure, le corps de base étant relié avec la bague intermédiaire au moyen d'un premier point d'assemblage et la bague intermédiaire avec la membrane de mesure au moyen d'un deuxième point d'assemblage, le premier et le deuxième point d'assemblage présentant chacun une brasure active,
**caractérisé**
**en ce que** la bague intermédiaire présente un matériau métallique, notamment W, MoTiZr ou MoCu, ou un matériau céramique, notamment du corindon.

14. Capteur de pression selon la revendication 13, pour lequel la membrane de mesure et/ou le corps de base présentent du corindon et la brasure active présente un alliage Zr-Ni-Ti.

15. Capteur de pression selon l'une des revendications 13 à 14, pour lequel la bague intermédiaire présente une épaisseur inférieure à 60 µm, notamment inférieure à 45 µm, de préférence inférieure à 30 µm et particulièrement de préférence inférieure à 20 µm.
